# EUROPÄISCHE PATENTSCHRIFT

(11) **EP 2 109 845 B1**
(45) Veröffentlichungstag und Bekanntmachung des Hinweises auf die Patenterteilung: **06.04.2011**
(21) Anmeldenummer: 07858217.8
(22) Anmeldetag: 28.12.2007
(51) Int. Cl.: G06K 9/00

(54) **FAHRERASSISTENZSYSTEM ZUR VERKEHRSZEICHENERKENNUNG**
DRIVER ASSISTANCE SYSTEM FOR THE DETECTION OF TRAFFIC SIGNS
SYSTÈME D'ASSISTANCE AU CONDUCTEUR POUR L'IDENTIFICATION DE LA SIGNALISATION ROUTIÈRE

(30) Priorität: 04.01.2007 DE 102007001099
(43) Veröffentlichungstag der Anmeldung: 21.10.2009
(73) Patentinhaber: Continental Automotive GmbH, 30165 Hannover (DE)
(72) Erfinder: BAUER, Jochen, 88131 Lindau (DE); GIEBEL, Jan, 88138 Sigmarszell (DE)
(86) Internationale Anmeldenummer: PCT/EP2007/064626
(87) Internationale Veröffentlichungsnummer: WO 2008/080976

(56) Entgegenhaltungen:
- DE-A1- 19 852 631
- US-A1- 2006 034 484
- HSU S H ET AL: "Road sign detection and recognition using matching pursuit method" IMAGE AND VISION COMPUTING, GUILDFORD, GB, Bd. 19, Nr. 3, 1. Januar 2001 (2001-01-01), Seiten 119-129, XP002465759 ISSN: 0262-8856

## Beschreibung

Die Erfindung betrifft eine Auswerteeinrichtung für ein Fahrerassistenzsystem für ein Fahrzeug mit einem Eingang zum Empfangen von von einer Kamera aufgenommenen Bildinformationen.

Unter dem Begriff der Fahrerassistenzsysteme (englisch: ADAS, Advanced Driver Assistance Systems) werden Funktionen zusammengefasst, welche der Unterstützung des Fahrers eines Kraftfahrzeuges dienen. Ziel der Fahrerassistenzsysteme ist häufig die Steigerung der Sicherheit durch die Vermeidung von Gefahrensituationen vor deren Entstehung und durch die Unterstützung des Fahrers zur Unfallvermeidung in kritischen Situationen. Weitere Ziele sind die Steigerung des Komforts durch Stressreduktion und Entlastung des Fahrers in Standardsituationen, die Erleichterung der Orientierung durch situationsabhängig aufbereitete und fahrergerecht vermittelte Umfeld-Informationen, sowie die Erhöhung des Fahrspaßes.

Beispiele für Fahrerassistenzfunktionen sind die Antriebsschlupfregelung bzw. Traktionskontrolle wie ABS (Antiblockiersystem), ASR (Antriebs-Schlupf-Regelung), ESP (Elektronisches Stabilitätsprogramm), EDS (Elektronische Differentialsperre), sowie adaptives Kurvenlicht, Auf- und Abblendassistent für das Fahrlicht, Nachtsichtsysteme (englisch: night vision), Tempomat, Einparkhilfe, Bremsassistent, ACC (Adaptive Cruise Control) bzw. Abstandsregeltempomat, Abstandswarner, Abbiegeassistent, Stauassistent, Spurerkennungssystem, Spurhalteassistent, Spurhalteunterstützung, Spurwechselassistent, ISA (Intelligent Speed Adaption), ANB (Automatische Notbremsung), Reifendruckkontrollsystem, Fahrerzustandserkennung, Verkehrszeichenerkennung, Platooning.

Für viele Fahrerassistenzfunktionen finden auf die Fahrumgebung eines Kraftfahrzeuges gerichtete Sensorsysteme Anwendung. Dies trifft beispielsweise auf Spurerkennungs- oder - überwachungs-nwendungen, Nachtsicht-Anwendungen, Hinderniswarnung, Pre-Crash-Sensierung, Automatische Geschwindigkeitsadaption, Stauassistent, Fußgänger- und Fahrradfahrerschutz, Verkehrszeichenerkennung, Einparkhilfe zu.

Der Erfindung liegt die Aufgabe zugrunde, eine effiziente Auswerteeinrichtung für ein Fahrerassistenzsystem, sowie ein entsprechendes Computerprogrammprodukt und ein Verfahren zum Betreiben eines Fahrerassistenzsystems aufzuzeigen.

Diese Aufgabe wird durch eine Auswerteeinrichtung mit den Merkmalen des Anspruchs 1, sowie durch ein Computerprogrammprodukt und ein Verfahren mit Merkmalen von nebengeordneten Ansprüchen gelöst. Vorteilhafte Ausgestaltungen und Weiterbildungen sind Gegenstand von Unteransprüchen.

Die erfindungsgemäße Auswerteeinrichtung für ein Fahrerassistenzsystem für ein Fahrzeug weist einen Eingang auf zum Empfangen von von einer Kamera aufgenommenen Bildinformationen. Weiterhin ist ein erster Bestandteil vorhanden zum Auffinden eines eine vorgegebene Form enthaltenden Bildausschnitts in ersten von der Kamera empfangenen Bildinformationen, sowie ein zweiter Bestandteil zum Anfordern von zweiten Bildinformationen, wobei die zweiten Bildinformationen einer erneuten Aufnahme eines vom ersten Bestandteil aufgefundenen Bildausschnitts mit gegenüber den ersten Bildinformationen verbessertem Kontrast entsprechen, sowie ein dritter Bestandteil zum Identifizieren eines Verkehrszeichens in den zweiten Bildinformationen. Ferner ist ein Ausgang vorgesehen zum Ausgeben eines Signals betreffend ein vom dritten Bestandteil identifiziertes Verkehrszeichen.

Von der Auswerteeinrichtung werden zu Beginn die ersten Bildinformationen ausgewertet. Hierbei wird nach einer vorgegebenen Form gesucht. Die vorgegebenen Form stimmt vorzugsweise mit der Form einer bestimmten Art von Verkehrszeichen überein, welche für das Fahrerassistenzsystem interessant ist. Wird diese vorgegebene Form in den ersten Bildinformationen aufgefunden, so werden die zweiten Bildinformationen angefordert. Zur Gewinnung der zweiten Bildinformationen soll derjenige Bildausschnitt, welcher die vorgegebene Form enthält, erneut von der Kamera aufgenommen werden. Die zweiten Bildinformationen unterscheiden sich von den ersten Bildinformationen dadurch, dass der Kontrast des Bildausschnittes besser ist.

Weiterhin ist es möglich, dass sich die zweiten Bildinformationen von den ersten Bildinformationen durch die Größe des Bildes unterscheiden. In diesem Fall sind die zweiten Bildinformationen hinsichtlich der Bildgröße vorzugsweise auf den oder die zuvor aufgefundenen Bildausschnitte beschränkt, welche die vorgegeben Form enthalten, umfassen somit im Gegensatz zu den ersten Bildinformationen nicht das gesamte Bild.

Alternativ hierzu ist es möglich, dass die zweiten Bildinformationen nicht auf den Bildausschnitt beschränkt sind, so dass die Bildgröße der zweiten Bildinformationen größer als der Bildausschnitt ist, indem sie beispielsweise die gleiche Größe wie das Bild der ersten Bildinformationen aufweist. Vorzugsweise ist hierbei der verbesserte Kontrast auf den Bildausschnitt beschränkt, so dass der Kontrast außerhalb des Bildausschnittes bei den ersten und den zweiten Bildinformationen gleich ist.

Die zweiten Bildinformationen werden von der Auswerteeinrichtung dahingehend untersucht, ob ein Verkehrszeichen identifizierbar ist. Die Identifizierung eines Verkehrszeichens ist bei den zweiten Bildinformationen einfacher als bei den ersten, da der Kontrast erhöht ist und somit das Aussehen bzw. der Inhalt des Verkehrszeichens genauer betrachtet werden kann. Es sind vorzugsweise der Auswerteeinrichtung eines oder mehrere bestimmte Verkehrszeichen bekannt, und im Rahmen der Identifizierung wird entschieden, ob ein Verkehrszeichen und falls dies zutrifft welches Verkehrszeichen vorhanden ist.

In Ausgestaltung der Erfindung handelt es sich bei der vorgegebenen Form um einen Kreis. Dies ist insbesondere vorteilhaft, wenn es sich bei dem Verkehrszeichen, welches identifiziert wird, um ein Geschwindigkeitsbegrenzungs-Verkehrszeichen handelt. Wird ein bestimmtes Geschwindigkeitsbegrenzungs-Verkehrszeichen identifiziert, ist hiermit die aktuell zulässige Höchstgeschwindigkeit bekannt. Diese Kenntnis kann genutzt werden, indem das ausgegebene Signal auf die Höchstgeschwindigkeit hinweist oder Maßnahmen zur Geschwindigkeitsanpassung anstößt.

Einer Weiterbildung der Erfindung gemäß entsprechen die zweiten Bildinformationen einer erneuten Aufnahme eines aufgefundenen Bildausschnitts mit gegenüber den ersten Bildinformationen veränderter Belichtungszeit. Bei der Veränderung der Belichtungszeit handelt es sich um eine Maßnahme zur Verbesserung des Kontrastes. Insbesondere kann hierzu die Belichtungszeit verlängert werden. Alternativ oder zusätzlich sind zur Erhöhung des Kontrastes eine oder mehrere der folgenden Vorgehensweisen möglich: Verwendung eines anderen Off-Set-Wertes, Verwendung einer veränderten Verstärkung, Verwendung von anderen HDR-Parametern. Vorzugsweise gibt die Auswerteeinrichtung der Kamera vor, auf welche Weise der Kontrast zu erhöhen ist. Alternativ hierzu ist es auch möglich, dass die Auswerteeinrichtung lediglich angibt, dass ein bestimmter Bildausschnitt mit erhöhtem Kontrast aufzunehmen ist, wobei die Kamera oder eine die Kamera steuernde Einrichtung entscheidet, auf welche Weise zur Gewinnung der zweiten Bildinformationen der Kontrast gegenüber den ersten Bildinformationen zu erhöhen ist.

In Ausgestaltung der Erfindung weisen die ersten Bildinformationen die gleiche Bildtiefe auf wie die zweiten Bildinformationen. In diesem Fall handelt es sich bei der Bildtiefe um einen nicht veränderbaren Parameter der Kamera, so dass zur Erhöhung des Kontrastes andere Parameter zu ändern sind.

Einer Weiterbildung der Erfindung gemäß handelt es sich bei dem Signal um ein von dem Fahrer des Fahrzeugs wahrnehmbares Signal, wie z.B. ein akustisches, optisches oder haptisches Signal. Alternativ oder zusätzlich kann es sich bei dem Signal um ein eine automatische Geschwindigkeitsreduktion des Fahrzeugs bewirkendes Signal handeln. Diese automatische Geschwindigkeitsreduktion erfolgt ohne Mitwirkung des Fahrers.

Das erfindungsgemäße Computerprogrammprodukt für ein Fahrerassistenzsystem für ein Fahrzeug umfasst Mittel zum Auffinden eines eine vorgegebene Form enthaltenden Bildausschnitts in ersten Bildinformationen, Mittel zum Anfordern von zweiten Bildinformationen, wobei die zweiten Bildinformationen einer erneuten Aufnahme eines aufgefundenen Bildausschnitts mit gegenüber den ersten Bildinformationen verbessertem Kontrast entsprechen, Mittel zum Identifizieren eines Verkehrszeichens in den zweiten Bildinformationen, und Mittel zum Ausgeben eines Signals betreffend ein identifiziertes Verkehrszeichen.

Unter einem Computerprogrammprodukt kann im Zusammenhang mit der vorliegenden Erfindung neben dem eigentlichen Computerprogramm (mit seinem über das normale physikalische Zusammenspiel zwischen Programm und Recheneinheit hinausgehenden technischen Effekt) insbesondere ein Aufzeichnungsträger für das Computerprogramm, eine Dateisammlung, eine konfigurierte Recheneinheit, aber auch beispielsweise eine Speichervorrichtung oder ein Server, auf der bzw. dem zum Computerprogramm gehörende Dateien gespeichert sind, verstanden werden.

Bei dem erfindungsgemäßen Verfahren zum Betreiben eines Fahrerassistenzsystems für ein Fahrzeug wird ein eine vorgegebene Form enthaltender Bildausschnitt in ersten Bildinformationen aufgefunden; daraufhin werden zweite Bildinformationen angefordert, wobei die zweiten Bildinformationen einer erneuten Aufnahme eines aufgefundenen Bildausschnitts mit gegenüber den ersten Bildinformationen verbessertem Kontrast entsprechen; ein Verkehrszeichen wird in den zweiten Bildinformationen identifiziert, und ein Signal betreffend ein identifiziertes Verkehrszeichen wird ausgegeben.

Das erfindungsgemäße Computerprogrammprodukt und das erfindungsgemäße Verfahren eignen sich insbesondere für die erfindungsgemäße Auswerteeinrichtung, wobei dies auch auf die Ausgestaltungen und Weiterbildungen zutreffen kann. Hierzu können sie weitere geeignete Mittel bzw. Schritte umfassen.

Im folgenden wird die Erfindung anhand eines Ausführungsbeispiels näher erläutert. Dabei zeigt:

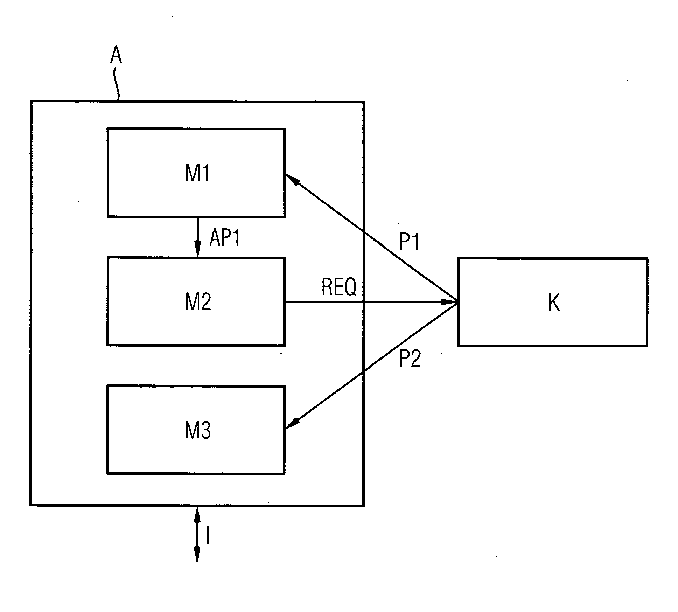

- Figur 1:: einen Ausschnitt eines Fahrerassistenzsystems eines Kraftfahrzeugs.

Die Erfindung wird Bezug nehmend auf die Fahrerassistenzsystemfunktion TSR (Traffic Sign Recognition, Verkehrszeichenerkennung) erläutert. TSR dient der Vermeidung von Geschwindigkeitsüberschreitungen. Insbesondere in fremder Umgebung wird aufgrund der Verkehrs- und Schilderdichte eine Geschwindigkeitsbeschränkung leicht übersehen und sorgt so für ein gefährliches und ungewolltes zu schnelles Fahren. Aus diesem Grund erkennt die Fahrerassistenzsystemfunktion TSR Geschwindigkeitsbegrenzungs-Verkehrszeichen.

Das Fahrerassistenzsystem der Figur 1 umfasst eine Videokamera K, z.B. eine CMOS-Kamera, welche die Umgebung vor dem Kraftfahrzeug aufnimmt. Die Kamera K ist hierzu vorzugsweise in der Nähe des Rückspiegels angebracht und erfasst den Bereich vor dem fahrenden Kraftfahrzeug. Die von der Kamera K gelieferten Informationen werden an die Auswerteeinheit A, vorzugsweise einen Bordcomputer, geliefert. Die der Auswerteeinheit A von der Kamera K zur Verfügung gestellten Bilder bestehen aus jeweils einem Grauwert für jedes Pixel der Bilder.

Die Auswerteeinheit A sucht nach Geschwindigkeitsbegrenzungs-Verkehrsschildern. Hierbei ist zusätzlich ein Abgleich mit Informationen des Navigationssystems möglich. Wird von der Auswerteeinheit A eine Geschwindigkeitsbeschränkung erkannt, kann diese dem Fahrer z.B. im Tacho oder in einem Head-up-Display eingeblendet werden. Für diese Information des Fahrers weist die Auswerteeinheit A eine Mensch-Maschine-Schnittstelle I auf. Alternativ oder zusätzlich zur Mensch-Maschine-Schnittstelle I kann eine Schnittstelle zur autonomen Kontrolle des Fahrzeugs vorgesehen sein. Über eine Schnittstelle zur autonomen Kontrolle des Fahrzeugs kann auf das Fahrzeug - z.B. durch Bremsen oder Beschleunigen - eingewirkt werden, ohne dass der Fahrer mitwirkt. Auf diese Weise ist ein automatischer Eingriff zur Tempodrosselung möglich. Auch der Tempomat kann über eine Schnittstelle zur autonomen Kontrolle des Fahrzeugs gesteuert werden, so dass die Tempomat-Vorgagen jeweils der aktuellen Höchstgeschwindigkeit angepasst werden können.

Üblicherweise werden für Fahrerassistenzsysteme Kameras mit einer Bittiefe bzw. Bildtiefe von 8 Bit pro Pixel eingesetzt. Die Anzahl der Bits entspricht hierbei der Anzahl an möglichen Helligkeitswerten für ein Pixel. Bei einer Bildtiefe von 8 Bit beispielsweise stehen für jedes Pixel 2⁸ Graustufen zur Verfügung. Je größer die Bildtiefe ist, desto kontrastreicher ist daher das aufgenommene Bild. Es wird davon ausgegangen, dass die Kamera K lediglich eine geringe Bildtiefe aufweist, so z.B. 8 Bit. Dies senkt den Preis der für das Fahrerassistenzsystem benötigten Kamera K; außerdem wird hierdurch der beschränkten Rechenkapazität des Systems Rechnung getragen.

Oftmals unterscheidet sich die Helligkeit eines Verkehrszeichens sehr stark von seiner Umgebung. Scheint die Sonne beispielsweise von hinten, so ähnelt ein rundes Verkehrszeichen einer weißen Scheibe; steht die Sonne der Fahrtrichtung entgegen, ähnelt ein rundes Verkehrszeichen einer dunklen Scheibe. Aufgrund der geringen Bildtiefe der Kamera K kann ein Verkehrszeichen in derartigen Situationen nicht eindeutig identifiziert werden, denn der Kontrast innerhalb der Scheiben ist zu klein.

Um trotz der geringen Bildtiefe der Kamera K ein Verkehrszeichen sicher erkennen zu können, wird wie folgt vorgegangen: die Kamera K übermittelt der Auswerteeinheit A die von ihr erfassten Bilder P1. Unter Verwendung eines geeigneten Algorithmus wird im Bestandteil M1 der Auswerteeinheit A nach Bildausschnitten gesucht, in welchen sich vermutlich ein Verkehrszeichen befindet. Hierzu wird die Kenntnis genutzt, dass die Geschwindigkeitsbegrenzungs-Verkehrszeichen eine bestimmte Form haben. Das Kriterium zur Entscheidung, ob ein Bildbereich vermutlich ein Geschwindigkeitsbegrenzungs-Verkehrszeichen enthält und daher wie im Folgenden beschrieben weiter betrachtet wird, ist somit eine Form. In Deutschland beispielsweise haben die Geschwindigkeitsbegrenzungs-Verkehrszeichen eine runde Form, in den USA eine rechteckige. Als Algorithmen zur Erkennung einer vorgegebenen Form können hierbei beispielsweise die Hough-Transformation oder das Template-Matching eingesetzt werden. Diese Algorithmen werden beschrieben z.B. in Bernd Jähne: "Digitale Bildverarbeitung", Springer Verlag 1997.

Der Bestandteil M1 informiert den Bestandteil M2 der Auswerteeinheit A über die aufgefundenen Bildbereiche AP1. Diese Bildbereiche AP1 enthalten jeweils die vorgegebene Form der Geschwindigkeitsbegrenzungs-Verkehrszeichen. Für die Größe der Bildbereiche AP1 gilt, dass sie entweder mit der erkannten Form übereinstimmen oder größer als diese sind. Handelt es sich bei der Form um einen Kreis, so kann der jeweilige Bildbereich AP1 ein Kreis der selben Größe sein oder z.B. ein Rechteck, innerhalb dessen sich der erkannte Kreis befindet.

Die Bildbereiche AP1 werden im folgenden als ROI (Region of Interest) dahingehend weiter untersucht, ob sie Geschwindigkeitsbegrenzungs-Verkehrszeichen enthalten. Hierzu sendet der Bestandteil M2 der Kamera K eine Anweisung REQ, die Bildbereiche AP1 mit einem gegenüber den Bildern P1 erhöhten Kontrast aufzunehmen. Zur Aufnahme der Bildbereiche AP1 mit erhöhtem Kontrast kann eine oder mehrere der folgenden Maßnahmen angewendet werden:
- Eine Veränderung der Belichtungszeit.
- Die Verwendung eines, gegebenenfalls gegenüber der Aufnahme der Bilder P1 erhöhten, Off-Set bzw. Schwarzabgleichs. Hierbei werden zu den Grauwerten bzw. den Helligkeits- oder Intensitätswert jedes einzelnen Bildpunktes konstante Werte hinzugefügt.
- Die Verwendung oder Veränderung einer Verstärkung. Hierbei werden die Spannungswerte der einzelnen Pixel jeweils mit einem für alle Pixel gleichen Wert multipliziert.
- Das Einstellen von Parametern einer nichtlinearen Kennlinie der HDR (High Dynamic Range) Technik, vorzugsweise die Anpassung von Knickpunkten und Steigungsverhältnissen. Bei HDR wird die üblicherweise lineare Kennlinie der Abbildung von Licht in Grauwerte durch eine stückweise lineare Kennlinie ersetzt, wobei der Teil für höhere Helligkeiten flacher verläuft als der Teil für geringere Helligkeit. Parameter der HDR Kennlinie sind die Lage der Knickpunkte und das Verhältnis der Steigungen der jeweiligen linearen Abschnitte. HDR wird beschrieben z.B. in http://www.photonfocus.com/html./de/cmos/linlog.php.

Die Aufnahme der Bilder mit erhöhtem Kontrast erfolgt rasch, so dass die Bildbereiche AP1 wiederholt erfasst werden können, bevor sie aufgrund der Fortbewegung der Fahrzeugs nicht mehr für die Kamera K sichtbar sind. Die mit erhöhtem Kontrast aufgenommenen Bilder P2 übermittelt die Kamera K an den Bestandteil M3 der Auswerteeinheit A. Der Bestandteil M3 überprüft die Bilder P2, um festzustellen, ob diese Geschwindigkeitsbegrenzungs-Verkehrszeichen enthalten. Die Entscheidung darüber, ob ein Geschwindigkeitsbegrenzungs-Verkehrszeichen vorhanden ist, kann z.B. unter Verwendung einer Verkehrszeichendatenbank erfolgen, in welcher Informationen über das Aussehen der für das Fahrerassistenzsystem relevanten Verkehrszeichen gespeichert sind. Wird vom Bestandteil M3 entschieden, dass ein Geschwindigkeitsbegrenzungs-Verkehrszeichen vorhanden ist, ergeht über die Schnittstelle I eine entsprechende Information an den Fahrer.

Die beschriebene Vorgehensweise weist den Vorteil auf, dass lediglich ein geringer Rechenbedarf notwendig ist gegenüber der Alternative, wonach das gesamte Bild mit einer hohen Bildtiefe aufgenommen wird. Der Kontrast wird nur für diejenigen Bereiche optimiert, welche für TSR relevant sind. Hierdurch kann die benötigte Bildtiefe bzw. der Dynamikumfang reduziert werden.

Aufgrund der Betrachtung der anhand ihrer Form erkannten Bildbereiche AP1 mit verbessertem Kontrast ist eine zuverlässige Erkennung von Verkehrszeichen möglich, so dass die Zuverlässigkeit und somit die Sicherheit und die Akzeptanz des Fahrerassistenzsystems gesteigert wird.

Während die Erfindung anhand von Geschwindigkeitsbegrenzungs-Verkehrszeichen erläutert wurde, ist sie auch auf andere Arten von Verkehrszeichen anwendbar.

## Patentansprüche

1. Auswerteeinrichtung (A) für ein Fahrerassistenzsystem für ein Fahrzeug, mit
einem Eingang zum Empfangen von von einer Kamera (K) aufgenommenen (P1, P2),
einem ersten Bestandteil (M1) zum Auffinden eines eine vorgegebene Form enthaltenden Bildausschnitts (AP1) in ersten von der Kamera (K) empfangenen Bildinformationen (P1),
einem zweiten Bestandteil (M2), der der Kamera (K) eine Anweisung (REQ) sendet, den Bildausschnitt (AP1) mit einem gegenüber den Bildern (P1 erhöhten Kontrast aufzunehmen, und zweite Bildinformationen (P2) anfordert, wobei die zweiten Bildinformationen (P2) einer erneuten Aufnahme des vom ersten Bestandteil (M1) aufgefundenen Bildausschnitts (AP1) mit gegenüber den ersten Bildinformationen (P1) verbessertem Kontrast entsprechen, einem dritten Bestandteil (M3) zum Identifizieren eines Verkehrszeichens in den zweiten Bildinformationen (P2), einem Ausgang (I) zum Ausgeben eines Signals betreffend ein vom dritten Bestandteil (M3) identifiziertes Verkehrszeichen.

2. Auswerteeinrichtüng (A) nach Anspruch 1, bei welcher es sich bei der vorgegebenen Form um einen Kreis handelt.

3. Auswerteeinrichtung (A) nach Anspruch 1 oder 2, bei welcher
es sich bei dem Verkehrszeichen um ein Geschwindigkeitsbegrenzungs-Verkehrszeichen handelt.

4. Auswerteeinrichtung (A) nach einem der Ansprüche 1 bits 3, wobei
die zweiten Bildinformationen (P2) einer erneuten Aufnahme eines aufgefundenen Bildausschnitts (AP1) entsprechen mit gegenüber den ersten Bildinformationen (P1) veränderter Belichtungszeit.

5. Auswerteeinrichtung (A) nach einem der Ansprüche 1 bis 4, wobei
die zweiten Bildinformationen (P2) einer erneuten Aufnahme eines aufgefundenen Bildausschnitts (AP1) entsprechen mit gegenüber den ersten. Bildinformationen (P1) unterschiedlichem Off-Set-Wert durch Hinzufügen von konstanten Werten zu den einzelnen Bildpunkten

6. Auswerteeinrichtung (A) nach einem der Ansprüche 1 bis 5, wobei
die zweiten Bildinformationen (P2) einer erneuten Aufnahme eines aufgefundenen Bildausschnitts (AP1) entsprechen mit gegenüber den ersten Bildinformationen (P1) veränderter Verstärkung.

7. Auswerteeinrichtung (A) nach einem der Ansprüche 1 bis 6, wobei
die zweiten Bildinformationen (P2) einer erneuten Aufnahme eines aufgefundenen Bildausschnitts (AP1) entsprechen mit gegenüber den ersten-Bildinformationen (P1) anderen High Dynamic Range Parametern.

8. Auswerteeinrichtung (A) nach.einem der Ansprüche 1 bis 7, bei welcher
die ersten Bildinformationen (P1) und die zweiten Bildinformationen (P2) die gleiche Bildtiefe aufweisen.

9. Auswerteeinrichtung (A) nach einem der Ansprüche 1 bis 8, bei welcher
es sich bei dem Signal um ein von dem Fahrer des Fahrzeugs wahrnehmbares Signal handelt.

10. Auswerteeinrichtung (A) nach einem der Ansprüche 1 bis 9, bei welcher
es sich bei dem Signal um ein eine automatische Geschwindigkeitsreduktion des Fahrzeugs bewirkendes Signal handelt.

11. Fahrerassistenzsystem für ein Fahrzeug, umfassend eine Auswerteeinrichtung (A) nach einem der Ansprüche 1 bis 10 und die Kamera (K).

12. Computerprogrammprodukt für ein Fahrerassistenzsystem für ein Fahrzeug, mit
Mitteln zum Auffinden eines eine vorgegebene Form enthaltenden Bildausschnitts (AP1) in ersten Bildinformationen (P1),
Mitteln zum Senden einer Anweisung (REQ) an die Kamera (K), den Bildausschnitt (AP1) mit einem gegenüber den Bilddern (P1) erhöhten Kontrast aufzunehmen, und zum Anfordern von zweiten Bildinformationen (P2), wobei die zweiten Bildinformationen (P2) einer erneuten Aufnahme des aufgefundenen Bildausschnitts (AP1) mit gegenüber den ersten Bildinformationen (P1) verbessertem Kontrast entsprechen,
Mitteln zum Identifizieren eines Verkehrszeichens in den zweiten Bildinformationen (P2),
Mitteln zum Ausgeben eines Signals betreffend ein identifiziertes Verkehrszeichen.

13. Verfahren zum Betreiben eines Fahrerässistenzsystems für ein Fahrzeugs, wobei
ein eine vorgegebene Form enthaltender Bildausschnitt (AP1) in ersten Bildinformationen (P1) aufgefunden wird, der Kamera (K) eine Anweisung (REQ) gesendet wird, den Bildausschnitt (AP1) mit einem gegenüber den Bildern (P1) erhöhten Kontrast aufzunehmen, und zweite Bildinformationen (P2) angefordert werden, wobei die zweiten Bildinformationen (P2) einer erneuten Aufnahme des aufgefundenen Bildausschnitts (AP1) mit gegenüber den ersten Bildinformationen (P1) verbessertem Kontrast entsprechen, ein Verkehrszeichen in den zweiten Bildinformationen (P2) identifiziert wird,
ein Signals betreffend ein identifiziertes Verkehrszeichen ausgegeben wird.

## Claims

1. Evaluation facility (A) for a driver assistance system for a vehicle, with
an input for receiving image information (P1, P2) recorded by a camera (K),
a first component (M1) for locating an image segment (AP1) containing a predetermined shape in first image information (P1) received from the camera (K),
a second component (M2), which sends the camera (K) an instruction (REQ) to record the image segment (AP1) with a higher contrast than the images (P1) and requests second image information (P2), the second image information (P2) corresponding to a new recording of the image segment (AP1) located by the first component (M1) with better contrast than the first image information (P1),
a third component (M3) for identifying a traffic sign in the second image information (P2), an output (I) for outputting a signal relating to a traffic sign identified by the third component (M3).

2. Evaluation facility (A) according to claim 1, wherein the predetermined shape is a circle.

3. Evaluation facility (A) according to claim 1 or 2, wherein the traffic sign is a speed limit traffic sign.

4. Evaluation facility (A) according to one of claims 1 to 3, wherein
the second image information (P2) corresponds to a new recording of a located image segment (AP1) with a modified exposure time compared with the first image information (P1).

5. Evaluation facility (A) according to one of claims 1 to 4, wherein
the second image information (P2) corresponds to a new recording of a located image segment (AP1) with a different offset value from the first image information (P1) by adding constant values to the individual image points.

6. Evaluation facility (A) according to one of claims 1 to 5, wherein
the second image information (P2) corresponds to a new recording of a located image segment (AP1) with modified amplification compared with the first image information (P1).

7. Evaluation facility (A) according to one of claims 1 to 6, wherein
the second image information (P2) corresponds to a new recording of a located image segment (AP1) with different High Dynamic Range parameters from the first image information (P1) .

8. Evaluation facility (A) according to one of claims 1 to 7, wherein
the first image information (P1) and the second image information (P2) have the same image depth.

9. Evaluation facility (A) according to one of claims 1 to 8, wherein
the signal is a signal perceptible to the driver of the vehicle.

10. Evaluation facility (A) according to one of claims 1 to 9, wherein
the signal is a signal that brings about an automatic reduction of the speed of the vehicle.

11. Driver assistance system for a vehicle, comprising an evaluation facility (A) according to one of claims 1 to 10 and the camera (K).

12. Computer program product for a vehicle assistance system for a vehicle, with
means for locating an image segment (AP1) containing a predetermined shape in first image information (P1),
means for sending the camera (K) an instruction (REQ) to record the image segment (AP1) with a higher contrast than the images (P1) and for requesting second image information (P2), the second image information (P2) corresponding to a new recording of the located image segment (AP1) with better contrast than the first image information (P1),
means for identifying a traffic sign in the second image information (P2),
means for outputting a signal relating to an identified traffic sign.

13. Method for operating a driver assistance system for a vehicle, wherein
an image segment (AP1) containing a predetermined shape is located in first image information (P1),
the camera (K) is sent an instruction (REQ) to record the image segment (AP1) with a higher contrast than the images (P1) and second image information (P2) is requested, the second image information (P2) corresponding to a new recording of the located image segment (AP1) with better contrast than the first image information (P1),
a traffic sign is identified in the second image information (P2),
a signal relating to an identified traffic sign is output.

## Revendications

1. Dispositif d'exploitation (A) pour un système d'assistance au conducteur pour un véhicule, comprenant :
une entrée pour recevoir des informations d'image (P1, P2) enregistrées par une caméra (K),
un premier composant (M1) pour détecter une section d'image (AP1) contenant une forme prédéfinie dans les premières informations d'image enregistrées par la caméra (K),
un deuxième composant (M2), qui envoie à la caméra (K) une instruction (REQ) pour enregistrer la section d'image (AP1) avec un contraste plus élevé par rapport aux images (P1), et qui demande des secondes informations d'image (P2), dans lequel les secondes informations d'image (P2) correspondent à un nouvel enregistrement de la section d'image (AP1) détectée par le premier composant (M1) avec un contraste amélioré par rapport aux premières informations d'image (P1),
un troisième composant (M3) pour identifier un panneau de signalisation dans les secondes informations d'image (P2), une sortie (I) pour délivrer un signal concernant un panneau de signalisation identifié par le troisième composant (M3).

2. Dispositif d'exploitation (A) selon la revendication 1, dans lequel
la forme prédéfinie est un cercle.

3. Dispositif d'exploitation (A) selon la revendication 1 ou 2, dans lequel
le panneau de signalisation est un panneau de signalisation de limitation de vitesse.

4. Dispositif d'exploitation (A) selon l'une quelconque des revendications 1 à 3, dans lequel
les secondes informations d'image (P2) correspondent à un nouvel enregistrement d'une section d'image détectée (AP1) avec un temps d'exposition modifié par rapport aux premières informations d'image (P1).

5. Dispositif d'exploitation (A) selon l'une quelconque des revendications 1 à 4, dans lequel
les secondes informations d'image (P2) correspondent à un nouvel enregistrement d'une section d'image détectée (AP1) avec une valeur de décalage différente par rapport aux premières informations d'image (P1) par addition de valeurs constantes aux points d'image individuels.

6. Dispositif d'exploitation (A) selon l'une quelconque des revendications 1 à 5, dans lequel
les secondes informations d'image (P2) correspondent à un nouvel enregistrement d'une section d'image détectée (AP1) avec une amplification modifiée par rapport aux premières informations d'image (P1).

7. Dispositif d'exploitation (A) selon l'une quelconque des revendications 1 à 6, dans lequel
les secondes informations d'image (P2) correspondent à un nouvel enregistrement d'une section d'image détectée (AP1) avec d'autres paramètres HDR (grande gamme dynamique) par rapport aux premières informations d'image (P1).

8. Dispositif d'exploitation (A) selon l'une quelconque des revendications 1 à 7, dans lequel
les premières informations d'image (P1) et les secondes informations d'image (P2) présentent les mêmes profondeurs d'image.

9. Dispositif d'exploitation (A) selon l'une quelconque des revendications 1 à 8, dans lequel
le signal est un signal perceptible par le conducteur du véhicule.

10. Dispositif d'exploitation (A) selon l'une quelconque des revendications 1 à 9, dans lequel
le signal est un signal provoquant une réduction de vitesse automatique du véhicule.

11. Système d'assistance au conducteur pour un véhicule, comprenant un dispositif d'exploitation (A) selon l'une quelconque des revendications 1 à 10 et la caméra (K).

12. Logiciel pour un système d'assistance au conducteur pour un véhicule, comprenant :
des moyens pour détecter une section d'image (AP1) contenant une forme prédéfinie dans des premières informations d'image (P1),
des moyens pour envoyer une instruction (REQ) à la caméra (K) pour enregistrer la section d'image (AP1) avec un contraste plus élevé par rapport aux images (P1) et pour demander des secondes informations d'image (P2), les secondes informations d'image (P2) correspondant à un nouvel enregistrement de la section d'image (AP1) détectée avec un contraste amélioré par rapport aux premières informations d'image (P1),
des moyens pour identifier un panneau de signalisation dans les secondes informations d'image (P2), et
des moyens pour délivrer un signal concernant un panneau de signalisation identifié.

13. Procédé pour faire fonctionner un système d'assistance au conducteur pour un véhicule, dans lequel
une section d'image (AP1) contenant une forme prédéfinie est détectée dans les premières informations (P1), une instruction (REQ) est envoyée à la caméra (K) pour enregistrer la section d'image (AP1) avec un contraste plus élevé par rapport aux images (P1) et des secondes informations d'image (P2) sont demandées, les secondes informations d'image (P2) correspondant à un nouvel enregistrement de la section d'image détectée (AP1) avec un contraste amélioré par rapport aux premières informations d'image (P1),
un panneau de signalisation est identifié dans les secondes informations d'image (P2),
un signal concernant un panneau de signalisation identifié est délivré.
